# EUROPÄISCHE PATENTSCHRIFT

(11) **EP 1 859 884 B1**
(45) Veröffentlichungstag und Bekanntmachung des Hinweises auf die Patenterteilung: **28.09.2011**
(21) Anmeldenummer: 07009648.2
(22) Anmeldetag: 15.05.2007
(51) Int. Cl.: B23D 61/02, B27B 19/00

(54) **Sägeblatt mit Abdeckung für Oszillationsantrieb**
Saw blade with cover for oscillation drive
Lame de scie dotée d'un capot pour l'entraînement par oscillation

(30) Priorität: 23.05.2006 DE 102006025068
(43) Veröffentlichungstag der Anmeldung: 28.11.2007
(73) Patentinhaber: C. & E. Fein GmbH, 73529 Schwäbisch Gmünd-Bargau (DE)
(72) Erfinder: Thomaschewski, Walter, 70794 Filderstadt (DE)
(74) Vertreter: Gahlert, Stefan

(56) Entgegenhaltungen:
- WO-A-89/09028
- CA-A1- 2 347 339
- US-A- 4 461 296
- US-A- 4 637 391
- US-A1- 2002 026 857
- US-B1- 7 641 047

## Beschreibung

Die Erfindung betrifft ein Sägeblatt für einen Oszillationsantrieb gemäß dem Oberbegriff des Anspruchs 1, Ein solches Sägeblatt ist aus US 4,461,296 A1 bekannt.

Die Erfindung betrifft ferner eine Säge mit einem Oszillationsantrieb, der eine um eine Längsachse drehoszillierend antreibbare Antriebswelle aufweist, an deren freiem Ende ein derartiges Sägeblatt aufgenommen ist.

Ein Sägeblatt gemäß der eingangs genannten Art ist aus der US 6 470 772 B2 bekannt.

Drehoszillierend angetriebene Sägen sind seit langem bekannt. Sie versetzen ein auf die Antriebswelle aufgesetztes Werkzeug in eine hin- und heroszillierende Drehbewegung um die Längsachse der Abtriebswelle. Hierbei kann die Frequenz zwischen etwa 5000 und 30000 Oszillationen pro Minute liegen, während der Verschwenkwinkel zwischen etwa 0,5 und 7° liegt.

Solche oszillierend angetriebene Sägen besitzen einen breiten Einsatzbereich für zahlreiche Sägeaufgaben, etwa im Holzbau, in der Karosseriebearbeitung oder auch in der Bearbeitung von Fugen und dergleichen mehr. Ein besonderer Vorteil derartiger Sägen liegt darin, dass infolge der oszillierenden Drehbewegung die Verletzungsgefahr gegenüber Kreissägen deutlich reduziert ist. Außerdem erfolgt kein Späneflug, so dass auf eine Schutzhaube verzichtet werden kann.

Gleichwohl besteht das Bedürfnis, die Verletzungsgefahr weiter zu reduzieren.

Es ist zwar etwa bei Winkelschleifern bekannt, am Gehäuse des Winkelschleifers eine Schutzhaube anzubringen, durch die die Schleifscheibe teilweise umschlossen ist. Die Anbringung einer derartigen Schutzhaube am Gehäuse ist jedoch teuer und aufwändig. Auch ist das Abnehmen einer solchen Schutzhaube mit weiterem Aufwand verbunden. Außerdem verhindert eine solche Schutzhaube die Sicht auf das zu sägende Material.

Aus der US-A-4,461,296 ist eine oszillierende Säge bekannt, bei der das Sägeblatt mit einer Abstützung versehen ist, um die Einbringtiefe des Sägeblattes während eines Schnittes zu begrenzen.

Vor diesem Hintergrund liegt der Erfindung die Aufgabe zugrunde, ein verbessertes Sägeblatt bzw. eine verbesserte Säge anzugeben, womit ein breiterer Anwendungsbereich ermöglicht wird und ein verbesserter Unfallschutz gewährleistet wird.

Diese Aufgabe wird durch ein Sägeblatt mit den Merkmalen des Anspruchs 1 gelöst. Weitere vorteilhafte Ausführungsformen sind den abhängigen Ansprüche 2 bis 10 zu entnehmen.

Ein zugeordneter Berührungsschutz für ein derartiges Sägeblatt ist erfindungsgemäß als Abdeckung ausgebildet, die auf die Form und Größe eines zugeordneten Sägeblattkörpers abgestimmt ist und Befestigungsmittel zur Befestigung am Sägeblattkörper aufweist.

Die Aufgabe der Erfindung wird ferner durch eine Säge mit einem Oszillationsantrieb gelöst, der eine um eine Längsachse drehoszillierend antreibbare Antriebswelle aufweist, an deren freien Ende ein Sägeblatt mit einem Berührungsschutz aufgenommen ist, der Befestigungsmittel zur Befestigung am Sägeblatt aufweist.

Die Aufgabe der Erfindung wird auf diese Weise vollkommen gelöst.

Erfindungsgemäß kann nämlich die Säge entweder mit dem Sägeblattkörper mit aufgesetztem Berührungsschutz verwendet werden, so dass die Unfallgefahr vermindert wird.

Falls es jedoch der besondere Einsatz erfordert, kann der Berührungsschutz abgenommen werden, sofern dieser lösbar am Sägeblattkörper befestigt ist. So ist die gesamte Schneide des Sägeblattkörpers vorteilhaft einsetzbar.

Auf diese Weise kann einerseits ein Arbeiten mit Berührungsschutz ermöglicht werden, andererseits kann auf einfache Weise auch ohne Berührungsschutz gearbeitet werden, sofern dies die Umstände erfordern.

Gemäß einer abgewandelten Ausführung der Erfindung ist der Berührungsschutz direkt am Sägeblattkörper befestigt. Dies kann beispielsweise durch eine stoffschlüssige Verbindung wie eine Verklebung oder etwa durch eine Klemmung erfolgen. Auf diese weise kann der Berührungsschutz unlösbar mit dem Sägeblattkörper verbunden sein.

So ergibt sich eine besonders einfache und preiswerte Ausführung eines Sägeblattes mit Berührungsschutz.

In vorteilhafter Weiterbildung der Erfindung ist der Berührungsschutz am Sägeblattkörper in einer Mehrzahl von Positionen festlegbar.

Dies erlaubt es, den Berührungsschutz für den jeweiligen Anwendungsbereich in eine optimale Position zu bewegen, ohne dass hierzu das Sägeblatt selbst von der Antriebswelle gelöst werden muss.

Gemäß einer weiteren Ausgestaltung der Erfindung ist der Berührungsschutz am Sägeblattkörper einclipsbar.

Dies erlaubt eine kostengünstige, schnelle und einfache Befestigung des Berührungsschutzes am Sägeblattkörper, vorzugsweise in verschiedenen möglichen Positionen.

Gemäß einer weiteren Ausgestaltung der Erfindung sind die Befestigungsmittel als Ausnehmungen am Sägeblattkörper ausgebildet, an denen der Berührungsschutz einclipsbar ist.

Dies erlaubt eine besonders einfache und leicht verstellbare Befestigungsmöglichkeit des Berührungsschutzes am Sägeblattkörper.

In vorteilhafter Weiterbildung der Erfindung sind die Ausnehmungen am Sägeblattkörper in gleichmäßigen Abständen zueinander und von der Schneide gleichmäßig beabstandet angeordnet.

Auf diese Weise kann der Berührungsschutz in verschiedenen Winkelpositionen an den Ausnehmungen des Sägeblattkörpers befestigt werden.

Gemäß einer weiteren Ausgestaltung der Erfindung ist der Sägeblattkörper von den Ausnehmungen durchsetzt.

Obwohl grundsätzlich die Ausnehmungen auch lediglich als Vertiefungen am Sägeblattkörper ausgebildet sein könnten, ergibt sich so ein besonders einfacher Aufbau und eine einfache Verbindungsmöglichkeit zwischen dem Berührungsschutz und dem Sägeblattkörper.

Die Schneide des Sägeblattkörpers ist gemäß einer weiteren Ausgestaltung der Erfindung kreisförmig oder teilkreisförmig ausgebildet. Sie kann etwa als glatte Schneide ausgebildet sein oder etwa mit Sägezähnen versehen sein.

Die Befestigungsmittel am Berührungsschutz sind gemäß einer weiteren Ausgestaltung der Erfindung als Vorsprünge ausgebildet, die in zugeordneten Ausnehmungen des Sägeblattkörpers in verschiedenen Positionen einclipsbar sind.

Wie zuvor bereits erwähnt, wird hierdurch eine besonders einfache Befestigungs- und Verstellmöglichkeit geschaffen.

Gemäß einer weiteren Ausgestaltung der Erfindung sind die Vorsprünge stiftförmig ausgebildet.

So können die Vorsprünge des Berührungsschutzes einfach in zugeordnete Ausnehmungen des Sägeblattkörpers eingedrückt werden.

Der Berührungsschutz weist vorzugsweise eine hohlprofilartige Querschnittsform auf.

So kann der Berührungsschutz von außen her auf die Schneide des Sägeblattkörpers aufgesetzt werden.

Gemäß einer weiteren Ausgestaltung der Erfindung weist der Berührungsschutz eine an der Krümmung der Schneide angepasste Krümmung auf.

Insbesondere bei einer Ausführung der Schneide als gekrümmte Schneide ergeben sich besondere Vorteile der erfindungsgemäßen Befestigungsmöglichkeit für den Berührungsschutz, da dieser so einfach in verschiedenen Winkelpositionen an dem Sägeblattkörper befestigt werden kann.

Der Berührungsschutz kann grundsätzlich einen beliebigen Teil der Schneide des Sägeblattkörpers abdecken.

In vorteilhafter Weiterbildung der Erfindung ist der Berührungsschutz jedoch so ausgebildet, dass er sich über einen Mittelpunktswinkel zwischen etwa 90° und etwa 200° erstreckt.

So wird für die meisten Einsatzfälle eine geeignete Abdeckmöglichkeit geschaffen. Während dann, wenn der Sägeblattkörper kreisförmig ausgebildet ist, in der Regel der Berührungsschutz einen Mittelpunktswinkel in der Nähe von etwa 180° aufweist, sind für den Fall, dass der Sägeblattkörper lediglich teilkreisförmig bzw. kreissegmentförmig ausgebildet ist, kleinere Mittelpunktswinkel von Vorteil.

Der Berührungsschutz besteht in vorteilhafter Weiterbildung der Erfindung aus Kunststoff und kann vorteilhaft als Spritzgussteil ausgebildet sein.

So ist eine einfache und kostengünstige Herstellung als Massenteil ermöglicht.

Es versteht sich, dass die vorstehend genannten und die nachstehend noch zu erläuternden Merkmale der Erfindung nicht nur in der jeweils angegebenen Kombination sondern auch in anderen Kombinationen oder in Alleinstellung verwendbar sind, ohne den Rahmen der Erfindung zu verlassen.

Weitere Merkmale und Vorteile der Erfindung ergeben sich aus der nachfolgenden Beschreibung bevorzugter Ausführungsbeispiele unter Bezugnahme auf die Zeichnung. Es zeigen:
- Fig. 1: eine Seitenansicht einer erfindungsgemäßen Säge mit einem zugeordneten Werkstück, dessen Schnittfläche angeschnitten ist;
- Fig. 2: eine Ansicht des erfindungsgemäßen Sägeblattes gemäß Fig. 1 in vergrößerter Darstellung mit aufgesetztem Berührungsschutz, von der Rückseite aus gesehen;
- Fig. 3: eine abgewandelte Ausführung eines erfindungsgemäßen Sägeblattes ohne aufgesetzten Berührungsschutz;
- Fig. 4: einen Schnitt durch das Sägeblatt gemäß Fig. 2 längs der Linie IV-IV und
- Fig. 5: eine Ansicht einer weiteren Abwandlung eines erfindungsgemäßen Sägeblattes.

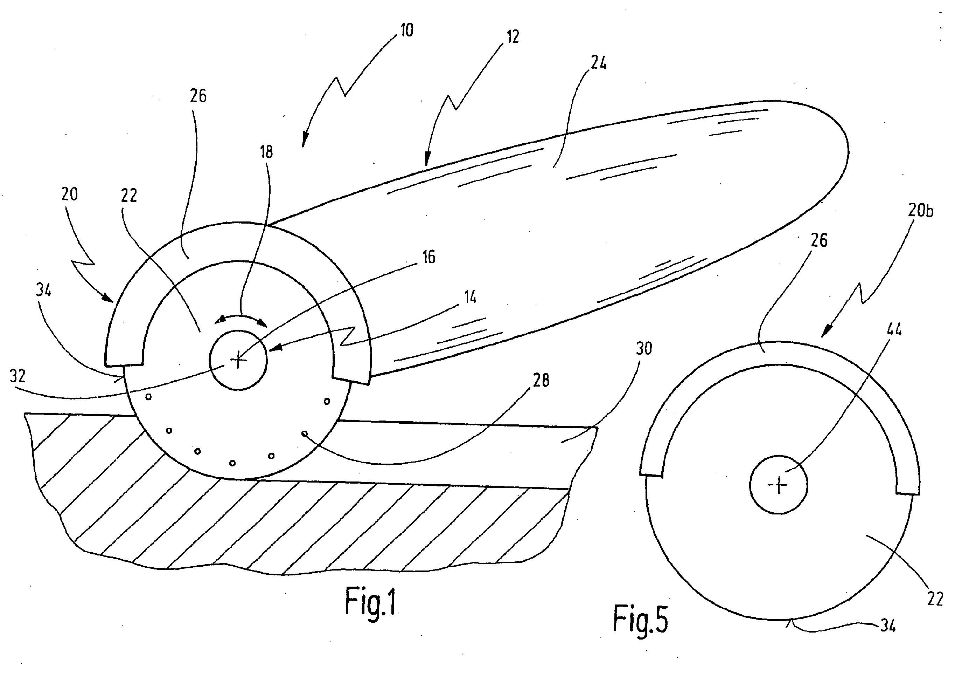

In Fig. 1 ist eine erfindungsgemäße Säge in der Seitenansicht dargestellt und insgesamt mit der Ziffer 10 bezeichnet.

Die Säge 10 weist einen Oszillationsantrieb 12 auf, der in einem länglichen Gehäuse 24 aufgenommen ist, das mittels einer Hand umgreifbar ist.

In Fig. 1 ist die erfindungsgemäße Säge 10 im Einsatz beim Schneiden eines Werkstückes 30 gezeichnet.

Am vorderen Ende des Oszillationsantriebes 12 ist eine Antriebswelle 14 vorgesehen, an deren freiem Ende ein insgesamt mit 20 bezeichnetes Sägeblatt formschlüssig aufgenommen und mittels einer Befestigungsschraube 32 befestigt ist. In Fig. 1 ist die Längsachse der Antriebswelle 14 mit 16 bezeichnet, während die Oszillationsbewegung durch einen Doppelpfeil 18 angedeutet ist.

Derartige Oszillationsantriebe 12 sind grundsätzlich im Stand der Technik bekannt, vergleiche z.B. US 4 920 702. Die Antriebswelle ist hierbei gerätefest gelagert und kann mit hoher Frequenz (etwa 5000 bis 30000 Oszillationen pro Minute) und mit kleinem Verschwenkwinkel (etwa 0,5° bis 7°) um ihre Längsachse hin und her drehoszillierend angetrieben werden. Solche Oszillationsantriebe 12 können für die verschiedenartigsten Aufgaben verwendet werden, beispielsweise zum Schleifen, wenn hierzu ein Schleifteller, der vorzugsweise dreieckförmig ausgebildet ist, auf der Antriebswelle befestigt wird.

Jedoch können derartige Oszillationsantriebe auch für Schneidzwecke vorteilhaft verwendet werden, wozu als Werkzeug ein Sägeblatt 20 auf der Antriebswelle 14 befestigt wird, wie in Fig. 1 dargestellt ist.

Das erfindungsgemäße Sägeblatt 20 einen Berührungsschutz 26 auf, der gemäß einer ersten Ausführung lösbar am Sägeblattkörper 22 des Sägeblattes 20 befestigt werden kann.

Hierzu sind entlang des Umfangs des Sägeblattkörpers 22, der im vorliegenden Fall kreisförmig ausgebildet ist, in gleichmäßigen Winkelabständen zueinander Befestigungsmittel 28 vorgesehen, die vorzugsweise als Ausnehmungen ausgebildet sind, die den Sägeblattkörper 22 durchsetzen.

Die Befestigungsmittel oder Ausnehmungen 28 sind auf einer Kreislinie angeordnet, die konzentrisch zum Mittelpunkt des kreisförmigen Sägeblattkörpers 22 angeordnet sind. Diesen Befestigungsmitteln oder Ausnehmungen 28 sind entsprechende Befestigungsmittel am Berührungsschutz 26 zugeordnet, die vorzugsweise als stiftförmige Vorsprünge oder Noppen auf einer Innenseite des Berührungsschutzes 26 ausgebildet sind, die als Rastelemente wirken.

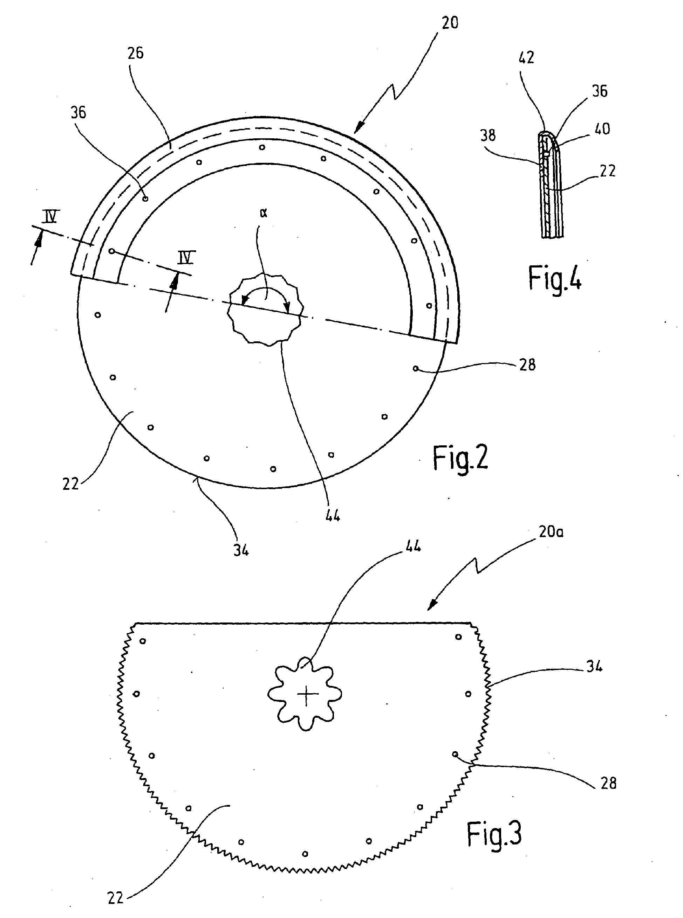

Auf diese Weise kann der Berührungsschutz 26, der nur einen Mittelpunktswinkel von etwas mehr als 180° abdeckt, in verschiedenen Winkelpositionen auf dem Sägeblattkörper durch Einclipsen der Vorsprünge des Berührungsschutzes 26 in die Ausnehmungen 28 des Sägeblattkörpers 22 befestigt werden, wie im Folgenden noch näher anhand der Figuren 2 und 4 erläutert wird.

Die Ausnehmungen 28 können als Bohrungen ausgebildet sein, vorzugsweise jedoch bei der Herstellung des Sägeblattkörpers 22 auf kostengünstige Weise durch Stanzen erzeugt werden. Da die Ausnehmungen 28 eine ausreichende Entfernung vom Rand aufweisen und nur einen geringen Durchmesser in der Größenordnung von etwa 1 bis 2 mm haben, wird die Stabilität der Sägeblattkörper 22 nicht beeinflusst.

In Fig. 2 ist das Sägeblatt 20 vergrößert dargestellt, wobei der aufgesetzte Berührungsschutz 26 von der Rückseite her erkennbar ist.

In der Mitte des Sägeblattkörpers 22 ist eine Aufnahme 44, die im vorliegenden Fall als sternförmige Befestigungsöffnung ausgebildet ist, vorgesehen, mittels derer der Sägeblattkörper 22 auf einem entsprechend geformten Ansatz der Antriebswelle 14 formschlüssig befestigt werden kann.

Wie bereits erwähnt, sind in regelmäßigen Winkelabständen zueinander die Befestigungsmittel oder Ausnehmungen 28 entlang des Umfangs der Schneide 34 angeordnet.

Wie aus Fig. 4 näher zu ersehen ist, ist der Berührungsschutz 26 im Querschnitt hohlprofilförmig ausgebildet, mit einem rückwärtigen Rand 38, mit einem vorderen Rand 40, der etwas schmaler als der rückwärtige Rand 38 ist, sowie mit einem Außenrand 42, der die beiden Ränder 38, 40 miteinander verbindet. Entlang des Innenumfangs des rückwärtigen Randes 38 sind an entsprechenden Positionen, die auf die Positionen der Ausnehmungen 28 des Sägeblattkörpers 22 abgestimmt sind, zugeordnete Befestigungsmittel in Form von Vorsprüngen 36 angeordnet, die als kurze Stifte ausgebildet sind.

Der Berührungsschutz 26 kann so zunächst von außen her auf den abzudeckenden Teil der Schneide 34 aufgesetzt werden und dann durch Eindrücken der Vorsprünge 36 in die zugeordneten Ausnehmungen 28 des Sägeblattkörpers 22 befestigt werden. Da sich der Berührungsschutz 26 nur über einen Teilkreis erstreckt, im vorliegenden Fall über einen Mittelpunktswinkel α von etwa 180°, kann der Berührungsschutz 26 in verschiedenen Winkelpositionen auf dem Sägeblattkörper 22 befestigt werden. Im dargestellten Fall sind insgesamt 16 Ausnehmungen 28 in gleichmäßigen Winkelabständen von 22,5° zueinander auf dem Sägeblattkörper 22 vorgesehen. In entsprechender Weise sind auf dem Berührungsschutz 26 acht Vorsprünge 36 an geeigneten Positionen auf der Innenseite des rückwärtigen Randes 38 vorgesehen. Auf diese Weise kann eine Verstellung in verschiedene Winkelpositionen erfolgen.

Es versteht sich, dass die Anzahl der Ausnehmungen 28 einerseits und der Vorsprünge 36 andererseits an die jeweiligen Erfordernisse angepasst werden kann.

Fig. 3 zeigt eine abgewandelte Ausführung eines erfindungsgemäßen Sägeblattes, das insgesamt mit Ziffer 20a bezeichnet ist. Hierbei ist der Sägeblattkörper 22 ohne aufgesetzten Berührungsschutz dargestellt.

Der Sägeblattkörper 22 ist kreissegmentförmig ausgebildet. Im Unterschied zu dem Sägeblattkörper 22 gemäß der Fig. 1 und 2 ist die Schneide 34 nicht als gerade Schneide sondern als mit Sägezähnen versehene Schneide ausgebildet.

Die zentrale Aufnahme 44 des Sägeblattkörpers 22 ist hierbei gleichfalls als eine Befestigungsöffnung ausgebildet, die zur formschlüssigen Verbindung mit der Antriebswelle 14 vorgesehen ist. Jedoch ist in Fig. 3 beispielhaft ein anderes Profil der Befestigungsöffnung 44 dargestellt, die auf ein entsprechend geformtes Profil der Antriebswelle 14 in verschiedenen Winkelpositionen aufsetzbar ist.

In Fig. 5 ist eine weitere abgewandelte Ausführung eines erfindungsgemäßen Sägeblattes dargestellt und insgesamt mit 20b bezeichnet.

Das Sägeblatt 20b ist wie das Sägeblatt 20 gemäß Fig. 1 kreisförmig ausgebildet und weist an seinem Umfang eine Schneide 34 auf. Die zentrale Aufnahme 44 ist hier beispielhaft als kreisförmige Befestigungsöffnung dargestellt, die für eine kraftschlüssige Befestigung auf der Antriebswelle 14 ausgebildet ist.

Der Berührungsschutz 26 ist hierbei im Unterschied zu den zuvor dargestellten Ausführungen stoffschlüssig etwa durch eine Verklebung direkt mit dem Sägeblattkörper 22 unlösbar verbunden. Auch eine Klemmbefestigung durch die Eigenspannung des aus Kunststoff bestehenden Berührungsschutzes 26 ist denkbar.

## Patentansprüche

1. Sägeblatt für einen Oszillationsantrieb (12), mit einer Berührungsschutz (26) und einem Sägeblattkörper (22), an dem eine Aufnahme (44) zur Verbindung mit einer um ihre Längsachse (16) drehoszillierend antreibbaren Antriebswelle (14) eines Oszillationsantriebs (12) aufgenommen ist, und der einen Rand aufweist, der zumindest teilweise als Schneide (34) ausgebildet ist, wobei am Sägeblattkörper (22) Befestigungsmittel (28) zur Befestigung des Berührungsschutzes (26) vorgesehen sind, **dadurch gekennzeichnet, dass** der Berührungsschutz als Abdeckung ausgebildet ist, durch die zumindest ein Teil der Schneide (34) des Sägeblattkörpers (22) abdeckbar ist.

2. Sägeblatt nach Anspruch 1, **dadurch gekennzeichnet, dass** der Berührungsschutz (26) am Sägeblattkörper (22) in einer Mehrzahl von Positionen festlegbar ist.

3. Sägeblatt nach Anspruch 1 oder 2, **dadurch** gekennzeichet, dass der Berührungsschutz (26) am Sägeblattkörper (22) eindipsbar ist.

4. Sägeblatt nach Anspruch 1 oder 2, **dadurch gekennzeichnet, dass** die Befestigungsmittel (28) als Ausnehmungen (28) am Sägeblattkörper (22) ausgebildet sind, an denen der Berührungsschutz (26) einclipsbar ist.

5. Sägeblatt nach Anspruch 4, **dadurch gekennzeichnet, dass** die Ausnehmungen (28) am Sägeblattkörper (22) in gleichmäßigen Abständen zueinander und von der Schneide (34) gleichmäßig beanstandet angeordnet sind.

6. Sägeblatt nach Anspruch 4 oder 5, **dadurch gekennzeichnet, dass** der Sägeblattkörper (22) von den Ausnehmungen (28) durchsetzt ist.

7. Sägeblatt nach Anspruch 1, **dadurch gekennzeichnet, dass** der Berührungsschutz (26) direkt am Sägeblattkörper (22) vorzugsweise unlösbar befestigt ist.

8. Sägeblatt nach einem der vorhergehenden Ansprüche, **dadurch gekennzeichnet, dass** die Schneide (34) kreisförmig oder teilkreisförmig ausgebildet ist.

9. Sägeblatt nach einem der vorhergehenden Ansprüche, **dadurch gekennzeichnet, dass** die Schneide (34) als glatte Schneide ausgebildet ist oder mit Sägezähnen versehen ist.

10. Säge mit einem Oszillationsantrieb (12), der eine um eine Längsachse (16) drehoszillierend antreibbare Antriebswelle (14) aufweist, an deren freien Ende ein Sägeblatt (20, 20a, 20b) nach einem der vorhergehenden Ansprüche aufgenommen ist.

## Claims

1. A saw blade for an oscillatory drive (12) comprising a touch protection (26) and a saw blade body (22), a support (44) being supported thereon for connection with a drive shaft (14) of an oscillatory drive (12) which can be driven in an oscillating manner about its longitudinal axis (16) and which further comprises an edge being at least partially configured as a cutting edge (34), fixing means (28) being provided on the saw blade body (22) for fixing the touch protection (26), **characterized in that** the touch protection (26) is configured as a cover, whereby at least a part of the cutting edge (34) of the saw-blade body (22) can be covered.

2. The saw blade according to claim 1, **characterized in that** the touch protection (26) can be fixed on the saw blade body (22) in a plurality of positions.

3. The saw blade according to claims 1 or 2, **characterized in that** the touch protection (26) can be clipped onto the saw blade body (22).

4. The saw blade according to claims 1 or 2, **characterized in that** the fixing means (28) are configured as recesses (28) on the saw blade body (22) into which the touch protection (26) can be clipped.

5. The saw blade according to claim 4, **characterized in that** the recesses (28) are arranged on the saw blade body at equal distances to each other and to the cutting edge (34).

6. The saw blade according to claims 4 or 5, **characterized in that** the saw blade body (22) is penetrated by the recesses (28).

7. The saw blade according to claim 1, **characterized in that** the touch protection (26) is fixed directly on the saw blade body (22), preferably non-detachably.

8. The saw blade according to any of the preceding claims, **characterized in that** the cutting blade (34) is configured to be circular or partially circular.

9. The saw blade according to any of the preceding claims, **characterized in that** the cutting blade (34) is configured as a smooth cutting blade or is provided with cutting teeth.

10. A saw comprising an oscillatory drive (12) having a drive shaft (14) which can be driven in an oscillating manner about its longitudinal axis (16), a saw blade (20), (20a), (20b) according to any of the preceding claims being received on the free end of the drive shaft.

## Revendications

1. Lame de scie pour un entraînement oscillant (12) comprenant une protection contre le contact (26) et un corps de lame de scie (22), sur lequel est reçu un logement (44) pour la connexion à un arbre d'entraînement (14) d'un entraînement oscillant (12) pouvant être entraîné avec une oscillation de rotation autour de son axe longitudinal (16), et qui présente un bord qui est réalisé au moins en partie sous forme de tranchant (34), des moyens de fixation (28) pour la fixation de la protection contre le contact (26) étant prévus sur le corps de lame de scie (22), **caractérisée en ce que** la protection contre le contact est réalisée sous forme de recouvrement qui permet de recouvrir au moins une partie du tranchant (34) du corps de lame de scie (22).

2. Lame de scie selon la revendication 1, **caractérisée en ce que** la protection contre le contact (26) peut être fixée sur le corps de lame de scie (22) dans une pluralité de positions.

3. Lame de scie selon la revendication 1 ou 2, **caractérisée en ce que** la protection contre le contact (26) peut être enclipsée sur le corps de lame de scie (22).

4. Lame de scie selon la revendication 1 ou 2, **caractérisée en ce que** les moyens de fixation (28) sont réalisés sous forme d'évidements (28) sur le corps de lame de scie (22) sur lesquels peut être enclipsée la protection contre le contact (26).

5. Lame de scie selon la revendication 4, **caractérisée en ce que** les évidements (28) sur le corps de lame de scie (22) sont disposés à distance uniforme les uns des autres et à distance uniforme du tranchant (34).

6. Lame de scie selon la revendication 4 ou 5, **caractérisée en ce que** le corps de lame de scie (22) est traversé par les évidements (28).

7. Lame de scie selon la revendication 1, **caractérisée en ce que** la protection contre le contact (26) est fixée directement sur le corps de lame de scie (22), de préférence de manière permanente.

8. Lame de scie selon l'une quelconque des revendications précédentes, **caractérisée en ce que** le tranchant (34) est réalisé sous forme circulaire ou partiellement circulaire.

9. Lame de scie selon l'une quelconque des revendications précédentes, **caractérisée en ce que** le tranchant (34) est réalisé sous forme de tranchant lisse ou est pourvu de dents de scie.

10. Scie comprenant un entraînement oscillant (12), qui présente un arbre d'entraînement (14) pouvant être entraîné avec une oscillation de rotation autour d'un axe longitudinal (16), sur l'extrémité libre duquel est reçue une lame de scie (20, 20a, 20b) selon l'une quelconque des revendications précédentes.
